(19) Europäisches Patentamt
European Patent Office
Office européen des brevets

(11) **EP 3 357 563 A1**

(12) **EUROPEAN PATENT APPLICATION**
published in accordance with Art. 153(4) EPC

(43) Date of publication:
**08.08.2018 Bulletin 2018/32**

(21) Application number: **16851935.3**

(22) Date of filing: **30.09.2016**

(51) Int Cl.:
**B01D 71/12** (2006.01)    **B01D 69/00** (2006.01)
**B01D 69/08** (2006.01)    **B01D 71/18** (2006.01)

(86) International application number:
**PCT/JP2016/079188**

(87) International publication number:
**WO 2017/057766 (06.04.2017 Gazette 2017/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2015 JP 2015194098**

(71) Applicant: **Toray Industries, Inc.**
**Tokyo 103-8666 (JP)**

(72) Inventors:
• **TAKADA Koichi**
  **Otsu-shi**
  **Shiga 520-8558 (JP)**
• **YAMAMURA Gohei**
  **Otsu-shi**
  **Shiga 520-8558 (JP)**

• **HIRANABE Ryuichiro**
  **Otsu-shi**
  **Shiga 520-8558 (JP)**
• **HANAKAWA Masayuki**
  **Otsu-shi**
  **Shiga 520-8558 (JP)**
• **TAKAHASHI Hiroshi**
  **Otsu-shi**
  **Shiga 520-8558 (JP)**
• **MIHARA Takaaki**
  **Otsu-shi**
  **Shiga 520-8558 (JP)**
• **KIMURA Masahiro**
  **Otsu-shi**
  **Shiga 520-8558 (JP)**
• **TOMIOKA Hiroki**
  **Otsu-shi**
  **Shiga 520-8558 (JP)**

(74) Representative: **Kador & Partner PartG mbB**
**Corneliusstraße 15**
**80469 München (DE)**

(54) **SEPARATION FILM, CELLULOSE-BASED RESIN COMPOSITION, AND METHOD FOR MANUFACTURING SEPARATION FILM**

(57)    The problem to be solved by the present invention is to provide a separation film mainly comprising a cellulose-based resin having high permeability. The present invention pertains to a separation film containing a cellulose ester, wherein the separation film is provided with a bicontinuous structure comprising voids and phases containing the cellulose ester, and the width of the voids is 1 to 200 nm inclusive.

FIG.1

phase containing a cellulose ester

void

EP 3 357 563 A1

**Description**

TECHNICAL FIELD

The present invention relates to a cellulose-based resin composition and a separation membrane with high permeation performance mainly including a cellulose-based resin, and relates to a method for producing the separation membrane.

BACKGROUND ART

In recent years, porous separation membranes have been used in various fields, for example, water treatment fields such as water purification treatment and wastewater treatment, medical applications such as blood purification, food industry fields, separators for batteries, charged membranes, electrolyte membranes for fuel cells, and the like.

Cellulose-based resins have been widely used as porous separation membranes including water treatment membranes, because they have permeation performance due to their hydrophilicity and have chlorine resistance performance of being resistant to chlorine-based bactericides.

For example, Patent Document 1 discloses a technique for obtaining a hollow fiber membrane by discharging a membrane forming solution including cellulose triacetate, a solvent, and a non-solvent into a coagulation liquid including a solvent, a non-solvent, and water to cause phase separation.

In addition, Patent Document 2 discloses a hollow fiber membrane for ultrafiltration, characterized in that hydroxyalkyl cellulose is fixed to the hollow fiber membrane in a form of fine particles, and a size of the hydroxyalkyl cellulose fine particles present in up to 1 $\mu$m depth from an outermost surface of the hollow fiber membrane is 5 nm to 100 nm.

BACKGROUND ART DOCUMENTS

PATENT DOCUMENTS

Patent Document 1: JP-A-2011-235204
Patent Document 2: JP-A-2015-157278

SUMMARY OF THE INVENTION

PROBLEMS THAT THE INVENTION IS TO SOLVE

The hollow fiber membranes obtained by the techniques described in Patent Documents 1 and 2 are asymmetric membranes and have separating layers with a small pore diameter which is responsible for a separation function, but the layers are made thin in order to obtain high water permeation performance, and there were problems that defects tend to occur easily. On the contrary, when the separating layers are made thick in order to reduce the occurrence of defects, there were problems that the water permeation performance is lowered.

In view of such a background of the conventional techniques, an object of the present invention is to provide a separation membrane or the like having high water permeability.

MEANS FOR SOLVING THE PROBLEM

In order to solve the above-described problems, the present inventors made extensive and intensive investigations. As a result, it has been found that a separation membrane containing a cellulose ester and including a co-continuous structure, which includes phases containing the cellulose ester and voids, thereby having high uniformity in void width in a minute pore diameter region in which each of voids has a width of 1 nm to 200 nm, can be provided. The present invention was thus accomplished.

Namely, the separation membrane of the present invention is as follows.

1 A separation membrane containing a cellulose ester,
in which the separation membrane comprises a co-continuous structure which includes phases containing the cellulose ester; and voids, and
each of the voids has a width of 1 nm to 200 nm.

2 The separation membrane according to (1), in which, in a graph with horizontal axis for wavenumber and vertical axis for intensity, which is obtained by Fourier transformation of a microscopic image photographed in a square visual field with each side having a length 10 times to 100 times the width of each of the voids of the separation membrane, when a peak half width is set as (a) and a peak maximum wavenumber is set as (b) in the graph, a region of 0 < (a)/(b) <1.5 is included therein.

3 The separation membrane according to 1 or 2, having a membrane permeation flux at 50 kPa and 25°C of 0.05 $m^3/m^2/h$ to 20 $m^3/m^2/h$.

4 The separation membrane according to any one of 1 to 3, having a thickness of 1 $\mu$m to 1000 $\mu$m.

5 The separation membrane according to any one of 1 to 4, in which the separation membrane is in a shape of a hollow fiber.

6 The separation membrane according to any one of 1 to 5, in which the hollow fiber has an outer diameter of 100 $\mu$m to 5000 $\mu$m.

7 The separation membrane according to any one of 1 to 6, in which the cellulose ester is at least one compound selected from the group consisting of cellulose acetate propionate and cellulose acetate butyrate.

8 A resin composition comprising a co-continuous structure,

in which the co-continuous structure includes a first phase containing a cellulose ester and a second phase partially compatible with the first phase, and

the second phase has a width of 1 nm to 1000 nm.

9 The resin composition according to 8, in which, in a graph with horizontal axis for wavenumber and vertical axis for intensity, which is obtained by Fourier transformation of a microscopic image photographed in a square visual field with each side having a length

10 times to 100 times the width of the second phase, when a peak half width is set as (a) and a peak maximum wavenumber is set as (b) in the graph, a region of 0 < (a)/(b) <1.5 is included therein.

10 The resin composition according to 8 or 9, having a thickness of 1 $\mu$m to 1000 $\mu$m.

11 The resin composition according to any one of 8 to 10, having a shape of a hollow fiber.

12 The resin composition according to any one of 8 to 11, in which the hollow fiber including the resin composition has an outer diameter of 100 $\mu$m to 5000 $\mu$m.

13 The resin composition according to any one of 8 to 12, in which the cellulose ester is at least one compound selected from the group consisting of cellulose acetate propionate and cellulose acetate butyrate.

14 A method for producing a separation membrane, including:

a resin melting step of melting and kneading 20 wt% to 90 wt% of a cellulose ester and 10 wt% to 60 wt% of a structure-forming agent to prepare a molten resin;

a molding step of discharging the molten resin from a discharge spinneret to obtain a membrane-shaped molded product;

a co-continuous structure forming step of forming a co-continuous structure, which includes a first phase containing a cellulose ester and a second phase partially compatible with the first phase, by heat-induced phase separation in the molten resin or molded product; and

a void forming step of eluting the second phase from the molded product to form voids, after the co-continuous structure forming step and the molding step.

15 The method for producing the separation membrane according to 14, in which a spinning spinneret is used as the discharge spinneret in the molding step to form a hollow fiber.

ADVANTAGE OF THE INVENTION

The separation membrane of the present invention includes a co-continuous structure, which includes phases containing a cellulose ester and the voids. In the co-continuous structure, variation of the widths of the voids is small. Since the voids serve as a flow channel for water, the variation in widths of the flow channel is small in the co-continuous structure. Since the variation of the widths of the flow channel is small, water easily flows and high water permeability can be obtained.

BRIEF DESCRIPTION OF DRAWINGS

[FIG. 1] FIG. 1 is a cross-sectional view schematically showing a co-continuous structure of a separation membrane of the present invention.

[FIG. 2] FIG. 2 is a cross-sectional view schematically showing a co-continuous structure of a resin composition of the present invention.

MODE FOR CARRYING OUT THE INVENTION

The present inventors made extensive and intensive investigations regarding the above-described problems, namely a separation membrane having highly uniform voids and containing a cellulose ester. As a result, they have successfully solved such problems by a membrane including a co-continuous structure, which includes phases containing the cellulose ester and voids, in which each of the voids has a width of 1 nm to 200 nm.

Namely, the present invention relates to a separation membrane containing a cellulose ester, and the separation membrane includes a co-continuous structure, which includes phases containing the cellulose ester and voids, and each void has a specified width.

Hereinafter, a separation membrane and a resin composition of the present invention will be described.

1. Separation Membrane

(1-1) Overview of Constitution of Separation Membrane

The separation membrane of the present invention contains a cellulose ester. In addition, the separation membrane includes a co-continuous structure, which includes phases containing a cellulose ester and voids.

The separation membrane of the present invention preferably contains a cellulose ester (A) as a main component. Namely, a percentage of the cellulose ester (A) in the separation membrane is preferably 50 wt% or more, more preferably 60 wt% or more, and still more preferably 70 wt% or more. In addition, the separation membrane may be substantially constituted of the cellulose ester alone.

In addition to the cellulose ester (A), the separation membrane may contain a plasticizer (B), a structure-forming agent (C) or the like.

The separation membrane may contain a liquid, such as water, etc., therein in order to maintain its shape. However, in the following description, such a liquid for maintaining the shape is not considered as a constituent element of the separation membrane.

(1-2) Composition

<Cellulose Ester (A)>

In the present invention, specific examples of the cellulose ester (A) include, for example, cellulose acetate, cellulose propionate, cellulose butyrate, and a cellulose-mixed ester in which 3 hydroxyl groups present in a glucose unit of cellulose are blocked with two or more types of acyl groups. Specific examples of the cellulose-mixed ester include, for example, cellulose acetate propionate, cellulose acetate butyrate, cellulose acetate laurate, cellulose acetate oleate, and cellulose acetate stearate.

Each cellulose-mixed ester exemplified has acetyl groups and other acyl groups (for example, a propionyl group, a butyryl group, a lauryl group, an oleyl group, a stearyl group, etc.). It is preferred that average degrees of substitution of the acetyl group and other acyl groups in the cellulose-mixed ester satisfy the following formulae. The average degree of substitution refers to the number of hydroxyl groups to which the acetyl group is chemically bonded, among 3 hydroxyl groups present per glucose unit of the cellulose.

$$1.0 \leq \{(\text{Average degree of substitution of acetyl group}) + (\text{Average degree of substitution of other acyl groups})\} \leq 3.0$$

$$0.1 \leq (\text{Average degree of substitution of acetyl group}) \leq 2.6$$

$$0.1 \leq (\text{Average degree of substitution of other acyl groups}) \leq 2.6$$

When the above formulae are satisfied, the membrane achieving both the separation performance and the permeation performance is accomplished. Further, when the above formulae are satisfied, good thermal flowability of the resin composition is likely to be accomplished during melt spinning, in the production of the separation membrane.

The separation membrane of the present invention may contain either one kind, or two or more kinds of the cellulose esters (A). Namely, the separation membrane, for example, contains at least one compound selected from the group consisting of the cellulose esters described in this specification.

In addition, in the separation membrane of the present invention, it is preferred to contain particularly at least one compound selected from the group consisting of cellulose acetate propionate and cellulose acetate butyrate, among the cellulose esters described above as the specific examples. The co-continuous structure, which includes phases containing the cellulose ester and voids, as described later, is accomplished by containing such cellulose ester.

In the present invention, a weight average molecular weight (Mw) of the cellulose ester (A) is preferably 50,000 to 250,000. When the Mw is 50,000 or more, thermal decomposition during melt spinning can be prevented, and the membrane strength of the separation membrane can reach a practical level, and thus Mw of 50,000 or more is preferred. When the Mw is 250,000 or less, a melt viscosity can be prevented from being excessively high and stable melt spinning is performed, and thus Mw of 250,000 or less is preferred.

The Mw is more preferably 60,000 to 220,000, and still more preferably 80,000 to 200,000. Here, the weight average molecular weight (Mw) is a value calculated by GPC measurement and will be described in detail in Examples.

<Plasticizer (B)>

The separation membrane of the present invention may contain a plasticizer (B). When a plasticizer (B) is contained in the resin composition used in membrane formation in production, the plasticizer (B) may remain in the separation membrane or at least a part of the plasticizer (B) may be eluted from the separation membrane, after the cellulose ester (A) has been thermoplasticized in the production of the membrane.

The content of the plasticizer (B) in the separation membrane is not particularly limited, and it is, for example, 40 wt% or less. The content of the plasticizer (B) is more preferably 5 wt% to 35 wt%, and still more preferably 10 wt% to 30 wt%.

Details of the plasticizer (B) will be described later.

<Structure-forming Agent (C)>

The separation membrane of the present invention may contain a structure-forming agent (C).

The content of the structure-forming agent (C) in the separation membrane is preferably 5 wt% to 60 wt%. The content of the structure-forming agent (C) is more preferably 50 wt% or less.

Details of the structure-forming agent (C) will be described later.

<Antioxidant (D)>

The separation membrane of the present invention may contain an antioxidant (D). Particularly, it is preferable to contain a phosphorus-based antioxidant, especially preferably a pentaerythritol-based compound, as the antioxidant (D). Specific examples of the pentaerythritol-based compound include bis (2,6-di-t-butyl-4-methylphenyl) pentaerythritol diphosphite.

In a case where the phosphorus-based antioxidant is contained, thermal decomposition during melt spinning is prevented. As a result, it becomes possible to improve the membrane strength and to prevent the membrane from being colored. The content of the antioxidant (D) is contained preferably 0.500 wt% or less relative to a composition for melt spinning.

(1-3) Shape of Separation Membrane

Although the shape of the separation membrane is not particularly limited, a separation membrane in a hollow fiber shape (hereinafter also referred to as a hollow fiber membrane) or a membrane in a planner shape (hereinafter also referred to as a flat membrane) is preferably adopted. Of these, the hollow fiber membrane is more preferred, because it is possible to be efficiently filled in a module, thereby being able to enlarge an effective membrane area per unit volume of the module. The hollow fiber membrane is a fibrous membrane having a hollow.

From a viewpoint of improving the permeation performance, a thickness of the separation membrane is preferably 1 μm to 1000 μm, more preferably 1 μm to 500 μm, still more preferably 2 μm to 400 μm, especially preferably 20 μm to 200 μm, and most preferably 50 μm to 150 μm.

In a case of the hollow fiber membrane, from a viewpoint of achieving both the effective membrane area at a time of being filled in the module and the membrane strength, an outer diameter of the hollow fiber is preferably 100 μm

to 5000 μm, more preferably 200 μm to 5000 μm, still more preferably 300 μm to 4000 μm, and especially preferably 400 μm to 700 μm.

In addition, in the case of the hollow fiber membrane, in view of a relationship between a pressure loss of a fluid flowing through a hollow part and a buckling pressure, the percentage of hollowness of the hollow fiber is preferably 15% to 70%, more preferably 20% to 65%, and still more preferably 25% to 60%.

A method for adjusting the outer diameter or the percentage of hollowness of the hollow fiber in the hollow fiber membrane to fall within the above-mentioned ranges is not particularly limited. For example, the adjustment can be made by appropriately changing a shape of a discharge outlet of a spinning spinneret for producing the hollow fiber or a draft ratio which can be calculated by a winding rate/discharge rate.

(1-4) Co-continuous Structure

In the separation membrane of the present invention, phases containing the cellulose ester (A) and voids form a co-continuous structure.

For the composition of the phases containing cellulose ester, description on the composition of the separation membrane is applied.

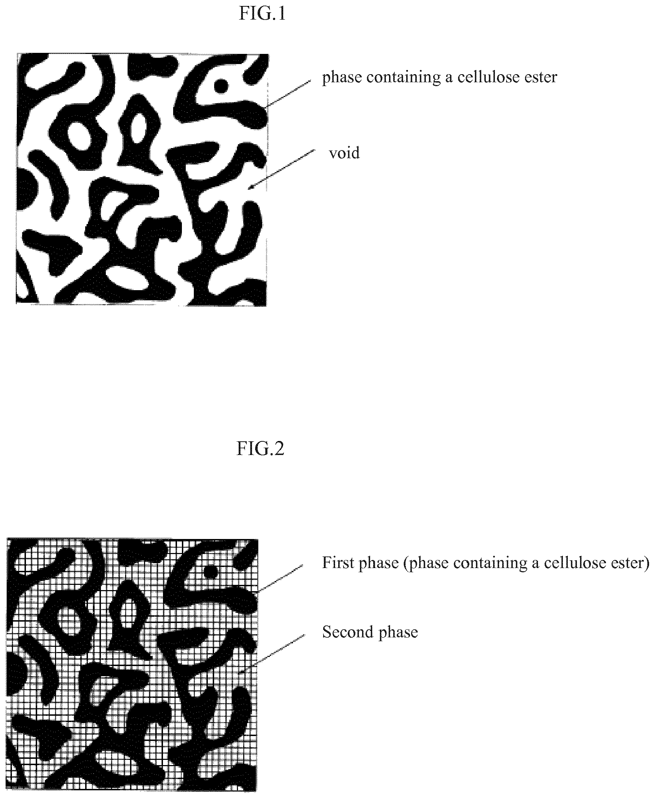

Herein, the co-continuous structure refers to a state where the phases containing cellulose ester (A) and the voids are continuous and three-dimensionally intertwined with each other when a cross section of the membrane was observed with a transmission electron microscope (TEM) or a scanning electron microscope (SEM) (see Fig. 1).

A schematic diagram of the co-continuous structure is also described in, for example, "Polymer Alloy Foundation and Application (2nd Edition) (Chapter 10.1)" edited by the Society of Polymer Science: Tokyo Kagaku Dojin.

The width of the void refers to a period calculated from a wavenumber of a maximum peak of a graph, which is prepared as follows: an image observed with a transmission electron microscope or scanning electron microscope is Fourier transformed and the wavenumber is plotted on a horizontal axis and intensity is plotted on a vertical axis.

When the width of the void is 1 nm or more, good permeation performance can be exhibited. The width of the void is preferably 2 nm or more, more preferably 10 nm or more, and still more preferably 20 nm or more. In addition, when the width of the void is 200 nm or less, good separation performance can be exhibited as a separation membrane. The width of the void is preferably 100 nm or less, more preferably 70 nm or less, and still more preferably 50 nm or less. In this specification, the width of the void is sometimes simply referred to as a pore diameter.

Generally, a porous body having the co-continuous structure has higher pore diameter uniformity than a porous body including aggregates of particles.

The pore diameter uniformity can be determined based on a peak half width of a curve obtained by plotting a pore diameter on the horizontal axis and the number of pores having the pore diameter on the vertical axis. Namely, in a case of a membrane having a uniform pore diameter, the curve forms a sharp peak, and the half width becomes narrow. On the other hand, in a case of having a non-uniform pore diameter, the curve forms a broad peak and the half width becomes wide. Since the pore diameter uniformity evaluation by the peak half width of the graph plotting the pore diameter on the horizontal axis and the number of pores on the vertical axis can be the same as an evaluation in which a reciprocal of the pore diameter, namely the wavenumber, is plotted on the horizontal axis, the evaluation is made by using the graph obtained by Fourier transforming the above described electron microscope image.

The microscopic image is captured in a square visual field with a side having a length 10 times to 100 times the width of the void. In addition, the peak half width and the peak maximum wavenumber of the graph, in which the wavenumber is plotted on the horizontal axis of the Fourier transformed graph and the intensity is plotted on the vertical axis, are determined.

Since the peak half width tends to increase as the peak maximum wavenumber increase, a value of (a)/(b), calculated from the peak half width (a) and the peak maximum wavenumber (b), is used as an index of the pore diameter uniformity evaluation.

In order to exhibit an excellent separation property, a higher pore diameter uniformity is preferred, and the value of (a)/(b) is preferably 1.5 or less, more preferably 1.2 or less, and still more preferably 1.0 or less. Since higher uniformity in the pore structure is preferable, from a viewpoint of separation performance, (a)/(b) is a value larger than 0, although a lower limit value thereof is not particularly limited.

Details of a method for determining the pore diameter will be described in Examples.

<Opening Ratio>

The separation membrane of the present invention preferably has a surface opening ratio (hereinafter, sometimes simply referred to as opening ratio) of 10% to 70%. When the opening ratio is 10% or more, a good permeation flux is obtained, and when the opening ratio is 70% or less, a good membrane strength is obtained. More preferably, the opening ratio is 15% to 60%, still more preferably 20% to 40%, and particularly preferably 25% to 35%.

The opening ratio is a ratio of the area of voids in an observation area when the surface is observed, and is expressed as opening ratio (%) = the area of the voids in the surface/the observed area × 100.

<Membrane Permeation Flux>

The separation membrane of the present invention preferably has a membrane permeation flux of 0.05 m$^3$/m$^2$/hr to 20 m$^3$/m$^2$/hr at 50 kPa and 25°C. More preferably, the membrane permeation flux is 0.1 m$^3$/m$^2$/hr to 15 m$^3$/m$^2$/hr, and still more preferably 0.2 m$^3$/m$^2$/hr to 10 m$^3$/m$^2$/hr. Measurement conditions of the membrane permeation flux will be described in detail in Examples.

<Additives>

The separation membrane of the present invention may contain additives other than the substances described above, as far as not impairing the effect of the present invention. For example, an organic lubricant, a crystal nucleating agent, organic particles, inorganic particles, a terminal blocking agent, a chain extender, an ultraviolet absorber, an infrared absorber, an anti-coloring agent, a delustering agent, an antimicrobial agent, an antielectricity agent, a deodorant, a flame retardant, a weathering agent, an antistatic agent, an antioxidant, an ion-exchanging agent, an antifoaming agent, a color pigment, a fluorescent whitening agent, a dye, and so on can be used as an additive.

<Use of Separation Membrane>

The separation membrane of the present invention can be used particularly for water treatment. Specific examples of a water treatment membrane include a microfiltration membrane and an ultrafiltration membrane. The separation membrane of the present invention is particularly preferably applied to the ultrafiltration membrane.

<Module>

The separation membrane of the present invention may be incorporated into a separation membrane module when used. The separation membrane module includes, for example, a membrane bundle constituted of a plurality of hollow fiber membranes and a case accommodating this membrane bundle therein.

So far as a flat membrane is concerned, it is fixed to a support, or the membranes are stuck to each other to form an envelope-shaped membrane, and further installed to a water collection tube or the like as needed, thereby achieving modularization.

2. Resin Composition

The present invention provides the following resin composition. Namely, the resin composition of the present invention includes a co-continuous structure, which includes a first phase containing a cellulose ester and a second phase partially compatible with the first phase (see Fig. 2).

(2-1) Composition

<Whole Resin Composition>

The resin composition may contain other components such as the plasticizer (B), the antioxidant (D) and the additive, in addition to the cellulose ester (A) and the structure-forming agent (C). For the components of the resin composition and the content thereof, description on raw materials of a molten resin in a resin melting step as described later is applied.

<First Phase>

The first phase preferably contains a cellulose ester as a main component. Namely, the percentage of the cellulose ester (A) in the first phase is 50 wt% or more, and preferably 60 wt% or more, or 70 wt% or more. In addition, the first phase may be constituted of the cellulose ester (A) alone.

The first phase contains the plasticizer (B). In addition, the first phase may further contain other components such as antioxidant.

The plasticizer is contained in 0.1 wt% or more in the first phase.

<Second Phase>

That the second phase is "partially compatible with the first phase" specifically means that the second phase contains the structure-forming agent (C), which is a substance partially compatible with the first phase, as a main component. Namely, the second phase contains a substance partially compatible with a mixture of the cellulose ester and the plasticizer, as the main component. Partial compatibility will be described later. The percentage of the structure-forming agent (C) in the second phase is 50 wt% or more, and preferably 60 wt% or more, or 70 wt% or more. In addition, the second phase may be constituted of the structure-forming agent (C) alone, or may further contain other components such as the plasticizer (B).

<Shape of Resin Composition>

As far as the resin composition includes a co-continuous structure, its shape is not particularly limited. The resin composition may be a hollow fiber or a flat membrane. The hollow fiber is a fibrous resin composition having a hollow. In order to distinguish the above from the separation membrane, these shapes are referred to as "hollow fiber" and "film", respectively.
The separation membrane obtained from the hollow fiber membrane and the film can be efficiently filled in a module, thereby being able to enlarge the effective membrane area per unit volume of the module, and thus it is more preferred.
From the viewpoint of obtaining good permeation performance when being made into a separation membrane, the molded resin composition preferably has a thickness of 1 $\mu$m to 1000 $\mu$m, more preferably 1 $\mu$m to 500 $\mu$m, still more preferably 2 $\mu$m to 500 $\mu$m, even more preferably 3 $\mu$m to 300 $\mu$m, and especially preferably 4 $\mu$m to 200 $\mu$m.
From the viewpoint of achieving both an effective fiber area at a time it is filled in the module and a fiber strength, the hollow fiber preferably has an outer diameter of 100 $\mu$m to 5000 $\mu$m, more preferably 200 $\mu$m to 5000 $\mu$m, still more preferably 300 $\mu$m to 4000 $\mu$m, and especially preferably 400 $\mu$m to 2000 $\mu$m.
In addition, in view of the relationship between the pressure loss of the fluid flowing through the hollow part and the buckling pressure, the hollow fiber preferably has a percentage of hollowness of 15% to 70%, more preferably 20% to 65%, and still more preferably 25% to 60%,.
A method for adjusting the outer diameter or the percentage of hollowness of the hollow fiber within the above-mentioned ranges is not particularly limited. For example, the adjustment can be made by appropriately changing the shape of the discharge outlet of the spinning spinneret for producing the hollow fiber or the draft ratio which can be calculated by the winding rate/discharge rate.

(2-2) Co-continuous Structure

Since the definition and observation method of the co-continuous structure in the resin composition are almost the same as those in the description for the separation membrane, the explanation thereof will be omitted. However, since it is the first phase and the second phase that form the co-continuous structure in the resin composition, "phases containing a cellulose" may be read as "a first phase" and "voids" as "a second phase".
In the resin composition, when the width of the second phase is 1 nm or more, a separation membrane having this resin composition can be obtained. The width of the second phase preferably is 2 nm or more, and still more preferably 30 nm or more. In addition, when the width of the second phase is 1000 nm or less, a separation membrane having an appropriate strength can be obtained from the resin composition. The width of the second phase is preferably 200 nm or less, more preferably 100 nm or less, and still more preferably 80 nm or less.
In order to obtain a separation membrane containing voids having a uniform width, it is preferable that the width of the second phase is uniform. The uniformity can be evaluated in the same manner as the co-continuous structure of the separation membrane, but the microscope image is captured in a square visual field with a side having a length 10 times to 100 times the width of the second phase.

3. Production Method

Next, the method for producing the resin composition and the separation membrane of the present invention will be specifically described with reference to a case where the resin composition and the separation membrane are a hollow fiber and a hollow fiber membrane, respectively, but is not limited thereto.
As the method for producing the resin composition and the separation membrane of the present invention, a melt spinning method is preferably applied.
The melt spinning method is a formation method of the resin composition and the membrane including a step of melting and kneading raw materials by heating to prepare a molten resin (a resin melting step); and a step of subsequently discharging this molten resin from a slit-shaped spinning spinneret, followed by cooling for solidification (a molding step). The melt spinning method is applicable to the production of both of a hollow fiber and a hollow fiber membrane.

Examples of the raw materials of the resin composition and the separation membrane include the cellulose ester (A), the plasticizer (B), the structure-forming agent (C), and the antioxidant (D). Specific examples of the respective raw materials are those as described above. The above raw materials are heated and melted so as to have a temperature equal to or higher than a melting point of each raw material, and are melted and kneaded using a single screw extruder, a twin screw extruder or the like to prepare a resin composition.

In particular, the present invention provides a method for producing the separation membrane, including: a resin melting step of melting and kneading a cellulose ester and a structure-forming agent to prepare a molten resin; a molding step of discharging the molten resin from a discharge spinneret to obtain a membrane-shaped molded product; a co-continuous structure forming step of forming a co-continuous structure by heat-induced phase separation in the molten resin or molded product; and a void forming step of eluting the structure-forming agent from the resin composition to form voids.

<Resin Melting Step>

The resin melting step is a step of preparing the molten resin for use in melting membrane formation. Formations of the flat membrane and the hollow fiber membrane are included in the melting membrane formation. Formation of the hollow fiber membrane is particularly called melt spinning.

[Raw Materials]

The raw materials of the molten resin (namely, materials used in the resin melting step) contain at least the cellulose ester (A) and the structure-forming agent (C), and may further contain the plasticizer (B) and the antioxidant (D).

Examples of the cellulose ester (A) are as described above.

The content of the cellulose ester (A) in the total amount of the raw materials is 20 wt% to 90 wt%. When the content of the cellulose ester (A) is 20 wt% or more, a membrane having a high strength can be achieved. When the content of the cellulose ester (A) is 90 wt% or less, melt molding by addition of a plasticizer or the like becomes possible, and good stringing property can be imparted. The content of the cellulose ester (A) is more preferably 30 wt% to 85 wt%, and still more preferably 40 wt% to 80 wt%.

The plasticizer (B) is not particularly limited, as long as it is a compound which thermoplasticizes the cellulose ester (A), namely, makes the same meltable. In addition, the plasticizer (B) may be used alone or in combination of two or more. As the plasticizer (B) in the present invention, preferred is a polyhydric alcohol-based compound. Specifically, examples of the polyhydric alcohol-based compound include polyalkylene glycols, glycerin-based compounds, caprolactone-based compounds, and derivatives thereof.

Of these, the polyalkylene glycols are preferred since the polyalkylene glycols have good compatibility with the cellulose ester (A) and thus exhibit thermoplasticity even with addition in small amounts, in terms of preventing a decrease in the membrane strength due to the plasticizer.

Specific examples of the polyalkylene glycols include polyethylene glycol, polypropylene glycol, and polybutylene glycol, each having a weight-average molecular weight of 200 to 2,000.

The content of the plasticizer (B) in the raw materials of the molten resin is preferably 3 wt% to 50 wt%. When the content of the plasticizer (B) is 3 wt% or more, the thermoplasticity of the cellulose ester (A) is good. When the content of the plasticizer (B) is 50 wt% or less, the spinnability is good. The content of the plasticizer (B) is more preferably 5 wt% to 40 wt%, and still more preferably 7 wt% to 30 wt%.

The structure-forming agent (C) may be partially compatible with the mixture of cellulose ester and a plasticizer thereof, and may be eluted or decomposed with a solvent that does not dissolve the cellulose ester.

Partial compatibility means that two or more substances are perfectly compatible under certain conditions but are separated in phases under different conditions. The structure-forming agent is a substance that undergoes phase separation from the cellulose ester by being placed under specific temperature conditions in the co-continuous structure forming step as described later. Specific conditions will be described later.

Specific examples of the structure-forming agent (C) include polyvinylpyrrolidone (PVP), copolymers containing PVP such as a PVP/vinyl acetate copolymer and a PVP/methyl methacrylate copolymer, polyvinyl alcohol, or polyester-based compounds. These can be used either alone or in combination thereof. When thermal crosslinking occurs in PVP, it becomes difficult to remove the structure-forming agent (C) as described later. Thus, PVP of relatively small molecular weight, which has a molecular weight of 20,000 or less, intermolecular crosslinking are relatively hard to proceed therein, and can elute even when crosslinking occurs, are preferably used. The use of a copolymer such as vinylpyrrolidone and vinyl acetate is also preferred from the viewpoint of reducing thermal crosslinking.

The content of the structure-forming agent (C) during melt spinning in the total amount of the raw materials of the molten resin is preferably 10 wt% to 60 wt%. When the content of the structure-forming agent (C) is 10 wt% or more, the cellulose ester phase and the structure-forming agent phase easily form a co-continuous structure having a periodic structure of 1 to 1000 nm in the co-continuous structure forming step as described later. When the content of the structure-forming agent (C) is 60 wt% or less, an excessive increase in the width of the structure-forming agent phase in the resin composition can be prevented.

The ratio of the total content of the plasticizer (B) and the structure-forming agent (C) in the total amount of the raw materials of the molten resin is preferably 13 wt% to 80 wt%. When the total content of the plasticizer (B) and the structure-forming agent (C) is 13 wt% or more, good spinnability and co-continuous structure are obtained. When the total content of the plasticizer (B) and the structure-forming agent (C) is 80 wt% or less, a resin composition and a separation membrane having a good strength are obtained. The total content of the plasticizer (B) and the structure-forming agent (C) is more preferably 20 wt% to 70 wt%, and still more preferably 30 wt% to 60 wt%.

Preventing an excessive increase in the thickness of the phase having the structure-forming agent in the resin composition also has an effect of preventing an excessive increase in the width of the voids of the separation membrane, resulting in good separation performance. The content of the structure-forming agent (C) is more preferably 15 wt% to 55 wt%, and still more preferably 20 wt% to 50 wt%.

The content of the antioxidant (D) in the total amount of the raw materials of the separation membrane is preferably 0.005 wt% to 0.500 wt% relative to the composition to be subjected to melt spinning.

Since the molten resin does not contain a solvent or has a solvent content of 20 wt% or less, there is no compositional change as a whole even after the molding step as described later. Therefore, formation of a pore by heat treatment becomes easy in the co-continuous structure forming step as described later.

(Molding Step)

The molding step is a step of molding the molten resin into a desired shape such as a hollow fiber shape or a flat membrane shape. The molten resin that has undergone the molding step is referred to as a "molded product".

In the case where the molten resin, which is prepared as above and contains the cellulose ester (A) as the main component, is formed into a hollow fiber by the melt spinning method, the spinning temperature (the temperature of the spinning pack) is preferably (Tm + 5°C) to (Tm + 50°C). Tm is a crystal melting temperature of this molten resin in temperature rise measurement with a differential scanning calorimeter (DSC). Measurement conditions of DSC will be described in detail in Examples.

The spinning temperature is more preferably (Tm + 5°C) to (Tm + 40°C), and still more preferably (Tm + 5°C) to (Tm + 30°C). By keeping this spinning temperature lower than usual, the strength of the resin composition and the separation membrane is increased.

In preparing the molded product having a hollow fiber shape, a spinning spinneret can be used as a discharge spinneret. Specifically, a spinning spinneret of a C-shaped slit, a spinning spinneret having one discharge outlet formed by arranging a plurality of (2 to 5) arcuate (arc-shaped) slit parts, a tube-in orifice type spinning spinneret, and so on can be used.

The molten resin is extruded downwards from the discharge outlet of the spinning spinneret which is attached in a lower part of the spinning pack. Herein, a distance H from the lower surface of the spinning spinneret to the upper end of a cooling apparatus (chimney) is preferably 0 to 500 mm, more preferably 0 to 400 mm, and still more preferably 0 to 300 mm.

When the hollow fiber discharged from the spinning spinneret is cooled, a temperature of the cooling air of the cooling apparatus (chimney) is preferably 5°C to 80°C. In addition, an air speed of the cooling air is preferably 0.1 to 2.0 m/sec, more preferably 0.3 to 2.0 m/sec, and still more preferably 0.5 to 2.0 m/sec.

The hollow fiber cooled with the cooling apparatus is wound by a winder. The draft ratio which can be calculated by a winding rate/discharge rate is preferably 1 to 1,000, more preferably 20 to 900, and still more preferably 30 to 800.

(Co-continuous Structure Forming Step)

The co-continuous structure forming step is carried out after the resin melting step. However, the co-continuous structure forming step may be carried out before or after the molding step. Namely, in the co-continuous structure forming step, either the molten resin or the molded product can be subject to treatment.

In order to form the co-continuous structure, namely, a structure in which the first phase containing the cellulose ester and the phase partially compatible with the first phase are continuous and intertwined with each other, phase separation can be used. The phase separation is induced when the temperature of a composition in which the cellulose ester and the structure-forming agent are compatible falls within a specific range. The phase separation induced under certain temperature condition within a specific range is called heat-induced phase separation. For a temperature within the specific range, it is preferable to set the temperature to be from a glass transition temperature to a spinodal line.

Namely, the co-continuous structure forming step is carried out by setting the temperature of the molten resin or the molded product within the specific range. The specific range is preferably 40°C to 220°C, more preferably 50°C to 200°C, and still more preferably 60°C to 180°C.

In order to obtain the co-continuous structure, particularly, phase separation by spinodal decomposition is preferably used. At the time of obtaining the co-continuous structure, it is preferable that the cellulose ester and the structure-forming agent are once compatible with each other before phase separation and undergo phase separation by spinodal decomposition to form the structure. In this way, a resin composition in which the second phase has a uniform width can be obtained.

The co-continuous structure forming step may include either cooling treatment or heating treatment. In addition, the cooling treatment may be treatment of annealing (cooling slowly) of a subject. For example, the molten resin or the molded product may be gradually cooled to reach the phase separation temperature, or may be rapidly cooled until it falls below the phase separation temperature and then its temperature may be raised to the phase separation temperature.

The annealing is carried out, for example, on the molten resin discharged from the spinning spinneret. Examples of the method for annealing include setting the distance H from the lower surface of the spinning spinneret to the upper end of the cooling device (chimney) to be large, setting the temperature of the cooling air of the cooling apparatus (chimney) to be high, setting the speed of the cooling air to be low, setting the draft ratio to be low, or the like. These methods can be combined optionally.

The method of heat treatment is not particularly limited. For example, high temperature treatment can be carried out by conveying a hollow fiber on a heating roll or putting the same in an air thermostatic oven or a liquid bath.

The molten resin or the molded product having the co-continuous structure and obtained in this step corresponds to the "resin composition" described above.

(Void Forming Step)

In the void forming step, at least a part of the second phase is removed (eluted) from the molded product, which underwent the co-continuous structure forming step and the molding step (since this molded product has a co-continuous structure, it is also a resin composition) and voids can be formed.

Removal of the second phase is carried out, for example, by immersing the molded product in a solvent, which does not dissolve or decompose the cellulose ester (A) but can dissolve or decompose the structure-forming agent. Such treatment is called an eluting step.

In the eluting step, examples of the solvent include an acidic aqueous solution, an alkaline aqueous solution, water, alcohols, and an aqueous alcohol solution.

It is preferable to hydrophilize the surface of the hollow fiber membrane by, for example, an alcohol-containing aqueous solution, an alkaline aqueous solution or the like before the membrane is used.

In this way, the separation membrane of the present invention including a co-continuous structure, which includes phases containing a cellulose ester and voids each having a predetermined width can be produced.

EXAMPLES

The present invention is more specifically described below by showing Examples. However, the present invention should not be construed as being restricted thereby in any way.

[Measurement and Evaluation Methods]

The respective characteristic values in Examples were determined by the following methods.

(1) Average Degrees of Substitution for Cellulose Ester (A)

A method for calculating the average degrees of substitution for a cellulose ester (A) in which acetyl groups and acyl groups are bonded to cellulose is as follows.

A cellulose ester was dried at 80°C for 8 hours, weighed for 0.9 g, and dissolved by adding 35 ml of acetone and 15 ml of dimethyl sulfoxide. Subsequently, 50 ml of acetone was further added thereto. 30 ml of a 0.5 N aqueous solution of sodium hydroxide was added while stirring, followed by saponification for 2 hours. Then, 50 ml of hot water was added to wash a side surface of a flask. Thereafter, titration was performed with 0.5 N sulfuric acid using phenolphthalein as an indicator. Separately, a blank test was performed by the same method as for the sample. After the completion of the titration, a supernatant of the solution was diluted to 100 times, and the compositions of organic acids were determined using an ion chromatograph. From the determination and the results of acid composition analysis by the ion chromatograph, the degrees of substitution were calculated by the following formulae.

$$TA = (B - A) \times F/(1000 \times W)$$

$$DSace = (162.14 \times TA)/[\{1 - (Mwace - (16.00 + 1.01)) \times TA\} + \{1 - (Mwacy - (16.00 + 1.01)) \times TA\} \times (Acy/Ace)]$$

DSacy = DSace $\times$ (Acy/Ace)
TA: Total organic acid amount (ml)
A: Sample titration amount (ml)
B: Blank test titration amount (ml)
F: Titer of sulfuric acid
W: Sample weight (g)
DSace: Average degree of substitution of acetyl groups
DSacy: Average degree of substitution of acyl groups
Mwace: Molecular weight of acetic acid
Mwacy: Molecular weight of other organic acids
Acy/Ace: Molar ratio of acetic acid (Ace) and other organic acids (Acy) 162.14: Molecular weight of a repeating unit of cellulose
16.00: Atomic weight of oxygen
1.01: Atomic weight of hydrogen

(2) Weight Average Molecular Weight (Mw) of Cellulose Ester (A)

A cellulose ester (A) was completely dissolved in tetrahydrofuran to a concentration of 0.15 wt% to prepare a sample for GPC measurement. Using this sample, GPC measurement was performed with Waters 2690 under the following conditions to determine the weight average molecular weight (Mw) in terms of polystyrene conversion.

Column: Two TSK gel GMHHR-H columns (manufactured by Tosoh Corporation) were connected to each other.
Detector: Waters 2410, differential refractometer RI
Solvent for mobile phase: Tetrahydrofuran
Flow rate: 1.0 mL/min
Injection amount: 200 $\mu$L

(3) Outer Diameters ($\mu$m) of Hollow Fiber and Hollow Fiber Membrane

Cross-sections in a direction perpendicular to a lengthwise direction of a hollow fiber or a hollow fiber membrane (in a fiber diameter direction) and in a thickness direction of the membrane were observed and photographed by an optical microscope, and the outer diameter ($\mu$m) of the hollow fiber or the hollow fiber membrane was calculated. The outer diameter of the hollow fiber or the hollow fiber membrane was calculated using 10 hollow fibers or hollow fiber membranes, and the average value thereof was obtained.
Since the hollow fiber is a molded product and resin composition, the hollow fiber may be referred to as "resin composition" hereinafter.

(4) Thicknesses of Hollow Fiber and Hollow Fiber Membrane

A cross-section in a fiber diameter direction of a hollow fiber or a hollow fiber membrane was observed and photographed by an optical microscope, and thicknesses of 6 positions of a hollow fiber or a hollow fiber membrane were measured. This measurement was performed on 10 hollow fibers or hollow fiber membranes, and the average value was taken as the thickness of the hollow fiber or the hollow fiber membrane

(5) Percentages of Hollowness (%) of Hollow Fiber and Hollow Fiber Membrane

A cross-section in a fiber diameter direction of a hollow fiber or a hollow fiber membrane was observed and photographed by an optical microscope, and a total area Sa of the cross-section and the hollow part area Sb were measured. The percentage of hollowness was calculated using the following formula. The percentage of hollowness was calculated using 10 hollow fibers or hollow fiber membranes, and the average value thereof was taken.

$$\text{Percentage of hollowness (\%)} = (Sb/Sa) \times 100$$

(6) Width (nm) of Second phase in Resin Composition and Width (nm) of Void in Separation Membrane

[Width of Second phase in Resin Composition]

Pre-treatment (TEM): A second phase was stained, and then ultra-thin sections were cut out in a direction perpendicular to a lengthwise direction of a resin composition.

Pre-treatment (SEM): A resin composition was frozen in liquid nitrogen, then a stress was applied to cleave the membrane so as to expose a cross-section in a direction perpendicular to a lengthwise direction of the resin composition, and then a second phase was stained.

Observation: The cross-section in the direction perpendicular to the lengthwise direction of the resin composition was observed using a transmission electron microscope (TEM) or a scanning electron microscope (SEM) at a magnification of 10,000 to 100,000, and an image of one visual field was obtained. When the second phase had a width which is too small to observe by SEM, observation was carried out by TEM. A square image was cut out from the obtained image and Fourier transformed, and then a graph is plotted with wavenumber on horizontal axis and intensity on vertical axis. A period was calculated from the wavenumber of a maximum peak and this period was taken as the width of the second phase of the visual field. When the maximum peak was not obtained, the observation magnification was suitably adjusted and the cross-section was observed again to calculate the width of the second phase. When the obtained width of the second phase and one side of the square image did not satisfy the relationship of Formula (1), the size of the square was changed and adjusted so as to satisfy the relationship of Formula (1), thereby calculating the width of the second phase. Observation positions include the vicinity of both surfaces, and 10 positions at equal intervals in a membrane thickness direction were taken and the width of the second phase was calculated at each observation position. A numerical value of the observation position where the width of the second phase was the smallest among them was taken as the width of the second phase.

$$\text{Width of Second Phase} \times 10 \leq \text{Side of Square} \leq \text{Width of Second Phase} \times 100$$

Formula (1)

[Width of Void in Separation Membrane]

Pre-treatment (TEM): Ultra-thin sections were cut out in a direction perpendicular to a lengthwise direction of a separation membrane.

Pre-treatment (SEM): A separation membrane obtained by carrying out the void forming step was frozen in liquid nitrogen, then a stress was applied to cleave the membrane so as to expose a cross-section in a direction perpendicular to a lengthwise direction of the separation membrane, and sputtering was carried out with platinum.

Observation: The cross-section in the direction perpendicular to the lengthwise direction of the separation membrane was observed using a transmission electron microscope (TEM) or a scanning electron microscope (SEM) at a magnification of 10,000 to 100,000, and an image of one visual field was obtained. When the void had a width which is too small to observe by SEM, observation was carried out by TEM. A square image was cut out from the obtained image and Fourier transformed, and then a graph is plotted with wavenumber on a horizontal axis and intensity on a vertical axis. A period was calculated from the wavenumber of a maximum peak and this period was taken as the width of the void of the visual field. When the maximum peak was not obtained, the observation magnification was suitably adjusted and the cross-section was observed again to calculate the width of the void. When the obtained width of the void and one side of the square image did not satisfy the relationship of Formula (2), the size of the square was changed and adjusted so as to satisfy the relationship of Formula (2), thereby calculating the width of the void. An observation position includes the vicinity of both surfaces, and 10 positions at equal intervals in a membrane thickness direction were taken, and the width of the void was calculated at each observation position. A numerical value of the observation position where the width of the void was the smallest among them was taken as the width of the void.

$$\text{Width of Void} \times 10 \leq \text{Side of Square} \leq \text{Width of Void} \times 100 \qquad \text{Formula (2)}$$

(7) Permeation Performance (Membrane Permeation Flux (m$^3$/m$^2$/h))

Distilled water was sent over 30 minutes under conditions of a temperature of 25°C and a filtration differential pressure of 50 kPa, and the amount (m$^3$) of permeated water obtained was measured and converted into values per unit time (h) and per unit membrane area (m$^2$), and the obtained value was taken as the permeation performance of pure water (unit = m$^3$/m$^2$/h). In Examples, a small module having four hollow fiber membranes and having an effective length of 200 mm was produced and membrane filtration treatment was carried out. Therefore, the unit membrane area was calculated from the average outer diameter and the effective length of the hollow fiber membrane.

(8) Calculation of Peak Half Width (a) / Peak Maximum Wavenumber (b)

A cross-section in a direction perpendicular to a lengthwise direction of a resin composition or a separation membrane was observed using a transmission electron microscope (TEM) or a scanning electron microscope (SEM) at a magnification of 10,000 to 200,000, and an image was obtained. In the obtained image, a square area, one side of which is 10 to 100 times the width of the second phase of the resin composition or the width of the void of the separation membrane, is appropriately selected and is Fourier transformed, and a graph is plotted with wavenumber on a horizontal axis and intensity on a vertical axis. From the peak wavenumber and half width of the graph, (a)/(b), an index of average pore diameter and uniformity, was determined.

(9) Crystal Melting Temperature (°C) of Resin Composition

The molten resin prepared above was rapidly cooled and solidified to use as a sample. Using a differential scanning calorimeter DSC-6200, manufactured by Seiko Instruments Inc., about 5 mg of the sample, which was dried in vacuum at 25°C for 8 hours, was set in an aluminum tray, increased in temperature from -50°C to 350°C at a temperature rising rate of 20°C/min, and thereafter held in a molten state for 5 minutes while keeping 350°C. A crystal melting peak observed at this time was taken as the crystal melting temperature (°C). When a plurality of crystal melting peaks appeared, the crystal melting peak which appeared on the highest temperature side was employed.

(10) Opening ratio (%)

After pre-treatment of a separation membrane by sputtering with platinum, the surface of the separation membrane was observed at a magnification of 10,000 to 200,000 using a scanning electron microscope to obtain an image. The obtained image was cut out into a square with a side of 1 μm. The square was binarized and an area thereof was calculated using image analysis software, and then the area of the void was measured. The opening ratio of the surface was determined from Formula (3).

$$\text{Opening ratio} = \text{Area of Void} \,/\, \text{Observation Area} \times 100 \qquad \text{Formula (3)}$$

[Cellulose Ester (A)]

Cellulose ester (A1): Cellulose acetate propionate

To 100 parts by weight of cellulose (cotton linter), 240 parts by weight of acetic acid and 67 parts by weight of propionic acid were added, followed by mixing at 50°C for 30 minutes. After the mixture was cooled to room temperature, 172 parts by weight of acetic anhydride cooled in an ice bath and 168 parts by weight of propionic anhydride were added as esterifying agents, and 4 parts by weight of sulfuric acid was added as an esterifying catalyst, followed by stirring for 150 minutes to carry out an esterification reaction. When the temperature exceeded 40°C in the esterification reaction, cooling was carried out in a water bath. After the reaction, a mixed solution of 100 parts by weight of acetic acid and 33 parts by weight of water was added thereto as a reaction terminator for 20 minutes to hydrolyze excessive anhydrides. Thereafter, 333 parts by weight of acetic acid and 100 parts by weight of water were added, followed by heating and stirring at 80°C for 1 hour. After the completion of the reaction, an aqueous solution containing 6 parts by weight of sodium carbonate was added. Cellulose acetate propionate precipitated was separated by filtration, subsequently washed with water, and thereafter dried at 60°C for 4 hours, thereby obtaining a cellulose ester (A1) (cellulose acetate propionate). The average degrees of substitution of acetyl groups and propionyl groups of cellulose acetate propionate obtained were 1.9 and 0.7, respectively, and the weight average molecular weight (Mw) thereof was 178,000.

Plasticizer (B)

Plasticizer (B1): Polyethylene glycol, having a weight average molecular weight of 600

Structure-forming Agent (C)

Structure-forming agent (C1): Polyvinylpyrrolidone (PVP K17)
Structure-forming agent (C2): PVP / vinyl acetate copolymer (Kollidon VA 64 (BASF Japan Ltd.))

Antioxidant (D)

Antioxidant (D1): bis (2,6-di-t-butyl-4-methylphenyl) pentaerythritol diphosphite

[Production of Resin Composition and Separation Membrane]

(Example 1)

57.3 wt% of cellulose ester (A1), 12.6 wt% of polyethylene glycol (B1) having a weight average molecular weight of 600 (manufactured by Sanyo Chemical Industries, Ltd.) as a plasticizer (B), 30.0 wt% of PVP (K17) (C1) (BASF Japan Ltd.), and 0.1 wt% of bis(2,6-di-t-butyl-4-methylphenyl)pentaerythritol diphosphite (D1) as an antioxidant (D) were melt-kneaded in a twin screw extruder at 240°C, were homogenized, and then were pelletized to obtain a resin for melt spinning. This resin was vacuum dried at 80°C for 8 hours.

The dried resin was fed to the twin screw extruder and melted-kneaded at 230°C to obtain a molten resin (a resin melting step). The molten resin was introduced into a melt spinning pack at a spinning temperature of 200°C, and spun downwards under conditions of a discharge rate of 10 g/min from an outer annular part of a spinneret having 4 spinneret holes (a double circular tube type, having a discharge outlet radius of 4.6 mm, and a slit width of 0.43 mm) (a molding step). The spun hollow fibers were introduced into a cooling apparatus (chimney) so that a distance H from a lower surface of the spinneret to an upper end of the cooling apparatus was 150 mm, and were wound by a winder at a draft ratio of 20, while cooling by cooling air at 25°C and an air speed of 0.1 m/sec (a co-continuous structure forming step). Physical properties of the hollow fiber (resin composition) thus obtained were shown in Table 1.

The resin composition obtained was immersed in a 50% ethanol aqueous solution for 12 hours to elute the structure-forming agent, resulting in forming voids and carrying out hydrophilization. The hollow fiber which went through the ethanol treatment is taken as a "separation membrane" and physical properties thereof were determined. The results were shown in Table 1.

(Examples 2 to 11 and Comparative Examples 1 to 2)

Hollow fibers (resin compositions) and separation membranes were obtained in the same manner as in Example 1, except that the composition of the resin composition for melt spinning and the production conditions were changed as shown in Table 1. Physical properties of the obtained hollow fibers and separation membranes were shown in Table 1.

(Example 12)

41.1 wt% of cellulose ester (A1), 8.8 wt% of polyethylene glycol (B1) having a weight average molecular weight of 600 (manufactured by Sanyo Chemical Industries, Ltd.) as a plasticizer (B), 50.0 wt% of PVP (K17) (C1) (BASF Japan Ltd.), and 0.1 wt% of bis(2,6-di-t-butyl-4-methylphenyl)pentaerythritol diphosphite (D1) as an antioxidant (D) were melt-kneaded in a twin screw extruder at 240°C, were homogenized, and then were pelletized to obtain a resin for melt spinning. This resin was vacuum dried at 80°C for 8 hours.

The dried resin was fed to the twin screw extruder and melted-kneaded at 230°C to obtain a molten resin (a resin melting step). The molten resin was introduced into a melt spinning pack at a spinning temperature of 230°C, and spun downwards under conditions of a discharge rate of 10 g/min from an outer annular part of a spinneret having 4 spinneret holes (a double circular tube type, having a discharge outlet radius of 4.6 mm, and a slit width of 0.43 mm) (a molding step). The spun hollow fibers were introduced into a cooling apparatus (chimney) so that a distance H from a lower surface of the spinneret to an upper end of the cooling apparatus was 150 mm, and wound by a winder at a draft ratio of 200 while cooling by cooling air at 25°C and an air speed of 1.0 m/sec,, and then heated in a hot air oven at 180°C for 10 minutes (a co-continuous structure forming step). Physical properties of the hollow fiber (resin composition) thus obtained were shown in Table 1.

The resin composition obtained was immersed in a 50% ethanol aqueous solution for 12 hours to elute the structure-forming agent, resulting in forming voids and carrying out hydrophilization. The hollow fiber which went through the ethanol treatment, is taken as a "separation membrane" and physical properties thereof were determined. The results were shown in Table 1.

(Example 13)

A hollow fiber and a separation membrane were obtained in the same manner as in Example 12, except that the composition of the resin composition for melt spinning and the production conditions were changed as shown in Table 1. Physical properties of the obtained hollow fiber (resin composition) and separation membrane were shown in Table 1.

[Table 1]

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|---|
| Resin composition for melt spinning | Cellulose mixed ester (A) | Kind | A1 | A1 | A1 | A1 | A1 | A1 | A1 | A1 | A1 | A1 | A1 | A1 | A1 | A1 | A1 |
| | | wt% | 57.3 | 57.3 | 57.3 | 493. | 49.3 | 41.1 | 41.1 | 31.1 | 49.9 | 57.3 | 57.3 | 41.1 | 41.1 | 81.9 | 22.9 |
| | Plasticizer (B) | Kind | B1 | B1 | B1 | B1 | B1 | B1 | B1 | B1 | B1 | B1 | B1 | B1 | B1 | B1 | B1 |
| | | wt% | 12.6 | 12.6 | 12.6 | 10.6 | 10.6 | 8.8 | 8.8 | 8.8 | 20 | 12.6 | 12.6 | 8.8 | 8.8 | 13 | 7 |
| | Structure-forming agent (C) | Kind | C1 | C1 | C1 | C1 | C1 | C1 | C1 | C1 | C1 | C2 | C2 | C1 | C1 | C1 | C1 |
| | | wt% | 30.0 | 30.0 | 30.0 | 40.0 | 40.0 | 50.0 | 50.0 | 60.0 | 30.0 | 30.0 | 30.0 | 50.0 | 50.0 | 5.0 | 70.0 |
| | Antioxidant (D) | Kind | D1 | D1 | D1 | D1 | D1 | D1 | D1 | D1 | D1 | D1 | D1 | D1 | D1 | D1 | D1 |
| | | wt% | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Production conditions | Spinning temperature | °C | 200 | 200 | 200 | 200 | 200 | 200 | 200 | 200 | 200 | 200 | 200 | 230 | 230 | 230 | 230 |
| | Draft ratio | - | 20 | 60 | 100 | 60 | 100 | 60 | 100 | 60 | 60 | 60 | 100 | 200 | 200 | 60 | 60 |
| | Chimney air speed | m/sec | 0.1 | 0.5 | 1.5 | 0.5 | 1.5 | 0.5 | 1.5 | 0.5 | 0.5 | 0.5 | 1.5 | 1.5 | 1.5 | 0.1 | 0.1 |
| | Heat treatment time | min | - | - | - | - | - | - | - | - | - | - | - | 10 | 5 | - | - |

EP 3 357 563 A1

(continued)

| Physical properties of resin composition | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|---|
| | Width of soluble components | nm | 198 | 67 | 29 | 76 | 41 | 98 | 48 | 171 | 78 | 62 | 34 | 79 | 51 | - | - |
| | Outer diameter of hollow fiber | $\mu$m | 700 | 600 | 540 | 570 | 500 | 510 | 460 | 450 | 430 | 560 | 520 | 320 | 320 | 700 | 400 |
| | Thickness of hollow fiber | $\mu$m | 110 | 78 | 79 | 78 | 78 | 75 | 76 | 68 | 74 | 74 | 74 | 53 | 53 | 108 | 80 |
| | Percentage of hollowness of hollow fiber | % | 47 | 55 | 50 | 53 | 48 | 50 | 45 | 49 | 43 | 54 | 51 | 45 | 45 | 48 | 36 |
| | (a)/(b) (of hollow fiber) | - | 1.14 | 0.93 | 0.74 | 1.09 | 0.79 | 1.19 | 0.90 | 1.42 | 1.09 | 1.13 | 0.85 | 1.11 | 0.91 | - | - |

EP 3 357 563 A1

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|---|
| Physical properties of separation membrane | Width of void | nm | 186 | 59 | 27 | 71 | 39 | 93 | 44 | 160 | 75 | 60 | 30 | 79 | 48 | - | - |
| | Outer diameter of hollow fiber membrane | $\mu$m | 700 | 600 | 540 | 570 | 500 | 510 | 460 | 450 | 430 | 560 | 520 | 320 | 320 | 700 | 400 |
| | Thickness of hollow fiber membrane | $\mu$m | 110 | 78 | 79 | 78 | 78 | 75 | 76 | 68 | 74 | 74 | 74 | 53 | 53 | 108 | 80 |
| | Percentage of hollowness of hollow fiber membrane | % | 47 | 55 | 50 | 53 | 48 | 50 | 45 | 49 | 43 | 54 | 51 | 45 | 45 | 48 | 36 |
| | Membrane permeation flux | $m^3/m^2/h$ | 1.7 | 0.4 | 0.1 | 0.7 | 0.3 | 0.9 | 0.4 | 2.2 | 0.5 | 0.6 | 0.2 | 0.7 | 0.5 | - | - |
| | (a)/(b) (of hollow fiber membrane) | - | 1.43 | 0.95 | 0.77 | 1.09 | 0.81 | 1.18 | 0.87 | 1.38 | 1.11 | 1.16 | 0.82 | 1.13 | 0.94 | - | - |
| | Surface opening ratio | % | 28 | 25 | 21 | 28 | 23 | 35 | 29 | 39 | 33 | 31 | 25 | 35 | 28 | - | - |

EP 3 357 563 A1

The resin compositions and membranes of Examples 1 to 13 all had a co-continuous structure. Further, from the results of Table 1, in all of the resin compositions of Examples 1 to 13, (a)/(b) (of the hollow fibers) was 1.50 or less, and the width of the second phase was uniform. In the separation membranes of Examples 1 to 13, (a)/(b) (of the hollow fiber membranes) was also 1.50 or less, and the width of each void was uniform.

On the other hand, no co-continuous structure was confirmed in the resin compositions and the separation membranes of Comparative Examples 1 and 2. In addition, in the separation membrane of Comparative Example 1, sufficient voids were not formed and the permeation performance could not be confirmed. In the separation membrane of Comparative Example 2, membrane collapse occurred during the measurement of the permeation performance, and the membrane permeation flux could not be measured.

Although the present invention has been described in detail using specific embodiments, it will be apparent to those skilled in the art that various modifications and variations are possible without departing from the spirit and scope of the present invention. This application is based on Japanese Patent Application filed on September 30, 2015 (Japanese Patent Application No. 2015-194098), the entirety of which is incorporated by reference.

INDUSTRIAL APPLICABILITY

The present invention provides a separation membrane having excellent separation performance and permeation performance, and mainly including a cellulose-based resin. The separation membrane of the present invention can be used for water treatment membranes for producing industrial water, drinking water or the like from seawater, brackish water, sewage water, waste water or the like, medical membranes for artificial kidneys, plasma separation or the like, membranes for food-beverage industry such as fruit juice concentration, gas separation membranes for separating exhaust gas, carbonic acid gas, or the like, membranes for electronic industry such as fuel cell separators, or the like. The above-mentioned water treatment membrane can be preferably used for microfiltration membranes, ultrafiltration membranes, or the like.

**Claims**

1. A separation membrane containing a cellulose ester, wherein the separation membrane comprises a co-continuous structure which includes phases containing the cellulose ester; and voids, and
   each of the voids has a width of 1 nm to 200 nm.

2. The separation membrane according to claim 1, wherein, in a graph with horizontal axis for wavenumber and vertical axis for intensity, which is obtained by Fourier transformation of a microscopic image photographed in a square visual field with each side having a length 10 times to 100 times the width of each of the voids of the separation membrane, when a peak half width is set as (a) and a peak maximum wavenumber is set as (b) in the graph, a region of 0 < (a)/(b) <1.5 is included therein.

3. The separation membrane according to claim 1 or 2, having a membrane permeation flux at 50 kPa and 25°C of 0.05 $m^3/m^2/h$ to 20 $m^3/m^2/h$.

4. The separation membrane according to any one of claims 1 to 3, having a thickness of 1 $\mu$m to 1000 $\mu$m.

5. The separation membrane according to any one of claims 1 to 4, wherein the separation membrane is in a shape of a hollow fiber.

6. The separation membrane according to any one of claims 1 to 5, wherein the hollow fiber has an outer diameter of 100 $\mu$m to 5000 $\mu$m.

7. The separation membrane according to any one of claims 1 to 6, wherein the cellulose ester is at least one compound selected from the group consisting of cellulose acetate propionate and cellulose acetate butyrate.

8. A resin composition comprising a co-continuous structure,
   wherein the co-continuous structure includes a first phase containing a cellulose ester and a second phase partially compatible with the first phase, and
   the second phase has a width of 1 nm to 1000 nm.

9. The resin composition according to claim 8, wherein, in a graph with horizontal axis for wavenumber and vertical axis for intensity, which is obtained by Fourier transformation of a microscopic image photographed in a square visual field with each side having a length 10 times to 100 times the width of the second phase, when a peak half width is set as (a) and a peak maximum wavenumber is set as (b) in the graph, a region of 0 < (a)/(b) <1.5 is included therein.

**10.** The resin composition according to claim 8 or 9, having a thickness of 1 $\mu$m to 1000 $\mu$m.

**11.** The resin composition according to any one of claims 8 to 10, having a shape of a hollow fiber.

**12.** The resin composition according to any one of claims 8 to 11, wherein the hollow fiber including the resin composition has an outer diameter of 100 $\mu$m to 5000 $\mu$m.

**13.** The resin composition according to any one of claims 8 to 12, wherein the cellulose ester is at least one compound selected from the group consisting of cellulose acetate propionate and cellulose acetate butyrate.

**14.** A method for producing a separation membrane, comprising:

a resin melting step of melting and kneading 20 wt% to 90 wt% of a cellulose ester and 10 wt% to 60 wt% of a structure-forming agent to prepare a molten resin;
a molding step of discharging the molten resin from a discharge spinneret to obtain a membrane-shaped molded product;
a co-continuous structure forming step of forming a co-continuous structure, which includes a first phase containing a cellulose ester and a second phase partially compatible with the first phase, by heat-induced phase separation in the molten resin or molded product; and
a void forming step of eluting the second phase from the molded product to form voids, after the co-continuous structure forming step and the molding step.

**15.** The method for producing the separation membrane according to claim 14, wherein a spinning spinneret is used as the discharge spinneret in the molding step to form a hollow fiber.

FIG.1

phase containing a cellulose ester

void

FIG.2

First phase (phase containing a cellulose ester)

Second phase

## INTERNATIONAL SEARCH REPORT

International application No.

PCT/JP2016/079188

A. CLASSIFICATION OF SUBJECT MATTER
*B01D71/12*(2006.01)i, *B01D69/00*(2006.01)i, *B01D69/08*(2006.01)i, *B01D71/18*
(2006.01)i

According to International Patent Classification (IPC) or to both national classification and IPC

B. FIELDS SEARCHED

Minimum documentation searched (classification system followed by classification symbols)
B01D71, B01D69

Documentation searched other than minimum documentation to the extent that such documents are included in the fields searched
Jitsuyo Shinan Koho        1922-1996    Jitsuyo Shinan Toroku Koho    1996-2016
Kokai Jitsuyo Shinan Koho  1971-2016    Toroku Jitsuyo Shinan Koho    1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/001426 A1 (Toray Industries, Inc.), 03 January 2008 (03.01.2008), & US 2009/0178969 A1 & EP 2033705 A1 & CA 2655907 A & CN 101472671 A & AU 2006345112 A | 1-15 |
| A | JP 2006-239680 A (Toray Industries, Inc.), 14 September 2006 (14.09.2006), & TW 200808434 A | 1-15 |
| A | JP 6-277473 A (Deutsche Carbone AG), 04 October 1994 (04.10.1994), & US 5611930 A & EP 592706 A1 & DE 69217551 C & DE 69217551 D & AT 148998 E & AT 148998 T | 1-15 |

☐ Further documents are listed in the continuation of Box C.    ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 November 2016 (29.11.16) | Date of mailing of the international search report<br>06 December 2016 (06.12.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011235204 A
- JP 2015157278 A

- JP 2015194098 A

**Non-patent literature cited in the description**

- Polymer Alloy Foundation and Application. Society of Polymer Science